# EUROPÄISCHE PATENTSCHRIFT

(11) **EP 1 924 483 B1**
(45) Veröffentlichungstag und Bekanntmachung des Hinweises auf die Patenterteilung: **29.02.2012**
(21) Anmeldenummer: 06754733.1
(22) Anmeldetag: 19.07.2006
(51) Int. Cl.: B62D 5/065, B62D 5/06

(54) **HYDRAULISCHE SERVOLENKVORRICHTUNG UND VERFAHREN ZUR STEUERUNG EINES PUMPENANTRIEBSMOTORS**
HYDRAULIC SERVO STEERING DEVICE AND METHOD FOR CONTROLLING A PUMP DRIVE MOTOR
DISPOSITIF DE SERVODIRECTION HYDRAULIQUE ET PROCEDE POUR COMMANDER UN MOTEUR D'ENTRAINEMENT DE POMPE

(30) Priorität: 07.09.2005 DE 102005042509
(43) Veröffentlichungstag der Anmeldung: 28.05.2008
(73) Patentinhaber: TRW Automotive GmbH, 73553 Alfdorf (DE)
(72) Erfinder: WIERTZ, Alexander, 42653 Solingen (DE); GASCHKA, Alexander, 45239 Essen (DE); PFEIFER, Arnd, 47877 Willich (DE)
(74) Vertreter: Prinz & Partner
(86) Internationale Anmeldenummer: PCT/EP2006/007114
(87) Internationale Veröffentlichungsnummer: WO 2007/028453

(56) Entgegenhaltungen:
- EP-A- 1 544 078
- DE-A1- 10 325 848
- US-A- 4 392 540

## Beschreibung

Die. Erfindung betrifft ein Verfahren zur Steuerung des Pumpenantriebsmotors einer hydraulischen Servolenkvorrichtung gemäß dem Oberbegriff des Anspruchs 1.

Aus der EP 0 673 328 B2 ist eine Servolenkvorrichtung für ein Kraftfahrzeug bekannt, bei der eine Hydraulikpumpe zur Förderung von Hydraulikfluid zu einem Servoventil von einem Elektromotor in zwei definierten Leistungsstufen angetrieben werden kann, nämlich einem Stand-by-Betrieb und einem Vollastbetrieb. Als Maß für die Leistungsanforderung der Hydraulikpumpe wird die Stromaufnahme des Motors mittels eines Stromsensors erfaßt. Der Stromsensor ist mit einer Steuereinheit verbunden, die die Werte des Stromsensors auswertet und gegebenenfalls eine Umschaltung aus einer Leistungsstufe des Motors in die andere vornimmt.

Die DE 103 25 848 A1 schlägt vor, zwischen der hohen Leistungsstufe und der niedrigen Leistungsstufe eine weitere, mittlere Leistungsstufe vorzusehen. Diese Zwischenstufe ermöglicht eine flexiblere Anpassung der Pumpenleistung an die jeweils herrschenden Anforderungen.

Die DE 102 11 396 A1 zeigt eine Hilfskraftlenkung mit einer Druckmittelpumpe und einem Antriebsmotor. Zwischen der Druckmittelpumpe und dem Motor ist eine Kupplung angeordnet, so daß die Druckmittelpumpe vom Motor trennbar ist. Die Trennung erfolgt insbesondere dann, wenn keine Lenkbewegung erfolgt, d.h. wenn keine hydraulische Unterstützung benötigt wird.

Ein gattungsgemäßes Verfahren zur Steuerung eines Pumpenantriebsmotors einer hydraulischen Servolenkvorrichtung ist aus der US 4 392 540 A bekannt. Ein Umschalten zwischen definierten Leistungsstufen des Pumpenantriebsmotors erfolgt ausschließlich in Abhängigkeit einer Drehung des Lenkrads, d. h. ob eine Betätigung des Lenkrads detektiert wird oder nicht.

Aufgabe der Erfindung ist es, eine Servolenkvorrichtung der eingangs genannten Art so weiterzubilden, daß der Energieverbrauch der Servolenkvorrichtung auf kostengünstige Weise gesenkt werden kann.

Gelöst wird diese Aufgabe durch ein Verfahren zur Steuerung eines Pumpenantriebsmotors einer hydraulischen Servolenkvorrichtung mit den Merkmalen des Anspruchs 1.

Die Erfindung beruht auf der Erkenntnis, daß in bestimmten Fahrsituationen keine hydraulische Lenkunterstützung erforderlich ist und auf die Funktion der Pumpe im Prinzip vollständig verzichtet werden kann. In diesen Situationen wird der Motor in der erfindungsgemäß vorgesehenen zusätzlichen Leistungsstufe (Stufe A) betrieben, bei der der Motor gar nicht oder nur mit äußerst geringer Drehzahl betrieben wird. Dieser Betrieb kann daher auch als "sleeping mode" bezeichnet werden. Vorteilhaft bei der erfindungsgemäßen Servolenkvorrichtung ist, daß keine Kupplung zum Trennen der Pumpe vom Motor erforderlich ist. Es hat sich gezeigt, daß durch die Einführung der zusätzlichen Leistungsstufe (Stufe A) nicht nur der durchschnittliche Energieverbrauch der Servolenkvorrichtung reduziert, sondern auch der CO₂-Ausstoß deutlich verringert werden kann.

Im Einhlang mit der Erfindung kann der Betrieb des Motors, insbesondere die Drehzahleinstellung, softwaregesteuert sein. Auf diese Weise kann auf eine mechanische An- oder Entkupplung der Pumpe verzichtet werden, da die Leistungsstufe und damit die Drehzahl des Motors von einem in einer Steuereinheit abgelegten Programm anhand vorgegebener Kriterien festgelegt wird, wobei die Kriterien individuell angepaßt werden können.

Beim erfindungsgemäßen Verfahren zur Steuerung eines Pumpenantriebsmotors einer hydraulischen Servolenkvorrichtung wird der Motor unter bestimmten Voraussetzungen, die eine Beeinträchtigung der Fahrsicherheit ausschließen, in der zusätzlichen Leistungsstufe (Stufe A) betrieben. Gemäß der Erfindung wird aus der zusätzlichen Leistungsstufe (Stufe A) dann in die niedrige Leistungsstufe (Stufe B) gewchselt.

Der Fahrer kann das Motor-/Pumpen-Aggregat der erfindungsgemäßen Servolenkvorrichtung "wecken". Gemäß der bevorzugten Ausführungsform der Erfindung ist nämlich vorgesehen, daß im Falle von definierten Lenkbewegungen die zusätzliche Leistungsstufe (Stufe A) automatisch verlassen wird.

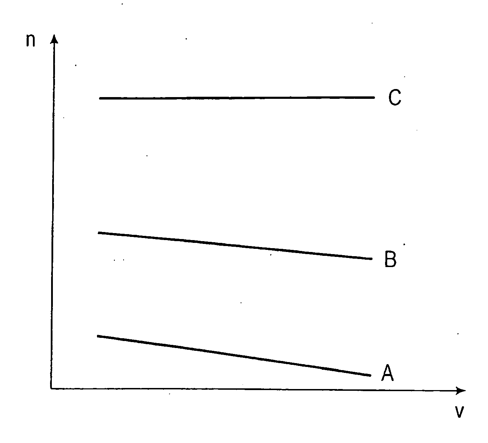

In der beigefügten Zeichnung, auf die in der folgenden Beschreibung Bezug genommen wird, zeigt die einzige Figur eine Diagrammdarstellung der Betriebsarten eines Pumpenantriebsmotors bei einer erfindungsgemäßen Servolenkvorrichtung.

Im Diagramm der Figur sind schematisch die definierten Leistungsstufen dargestellt, in denen der Motor der erfindungsgemäßen Servolenkvorrichtung betrieben werden kann, wobei die konkrete Abhängigkeit der Motordrehzahl n von der Fahrzeuggeschwindigkeit v von der Darstellung im Diagramm abweichen kann.

Es sind in bekannter Weise eine hohe Leistungsstufe C (Vollast) und eine niedrige Leistungsstufe B (Stand-by) vorgesehen. Im Vollastbetrieb wird der Motor mit hoher Drehzahl n betrieben, so daß die Pumpe einen hohen hydraulischen Fluß erzeugt. Im Stand-by-Betrieb ist die Motordrehzahl n soweit reduziert, daß nur noch eine geringe Hydraulikströmung aufrechterhalten wird. Bei erhöhtem Leistungsbedarf der Pumpe wird der Motor in den Vollastbetrieb, bei geringem Leistungsbedarf wieder zurück in den Stand-by-Betrieb geschaltet. Diese beiden Leistungsstufen bilden somit einen integralen Bestandteil des Lenkzyklus.

Zwischen den Leistungsstufen C und B kann noch eine mittlere Leistungsstufe (Last) vorgesehen sein, die im Diagramm nicht dargestellt ist.

Eine weitere definierte Leistungsstufe A ist unterhalb des Stand-by-Betriebs angesiedelt. In dieser Leistungsstufe A, die keinen integralen Bestandteil des Lenkzyklus darstellt und als "sleeping mode" bezeichnet wird, ist die Drehzahl n des Motors gegenüber der niedrigen Leistungsstufe B nochmals signifikant verringert.

Der Motor der erfindungsgemäßen Servolenkvorrichtung ist permanent, d.h. kupplungsfrei, an die Pumpe gekoppelt. Den Betrieb des Motors, insbesondere die Drehzahleinstellung, übernimmt eine programmierte Steuereinheit. Unter bestimmten Vorraussetzungen, die eine Beeinträchtigung der Fahrsicherheit ausschließen, verfügt die Steuereinheit über eine Umschaltung in die zusätzliche Leistungsstufe A. Der sleeping mode wird durch definierte Lenkbewegungen des Fahrers automatisch verlassen, wobei dann ein Wechsel in die üblichen Betriebsstufen der Lenkung erfolgt.

## Patentansprüche

1. Verfahren zur Steuerung eines Pumpenantriebsmotors einer hydraulischen Servolenkvorrichtung mit einer Pumpe, bei dem der Pumpenantriebsmotor wahlweise wenigstens in einer definierten hohen Volllast-Leistungsstufe (C), in der der Motor mit hoher Drehzahl (n) betrieben wird, sodass die Pumpe einen hohen hydraulischen Fluss erzeugt, und in einer definierten niedrigen Stand-by-Leistungsstufe (B) mit reduzierter Motordrehzahl (n) betrieben wird, sodass nur eine geringe Hydraulikströmung aufrechterhalten wird, wobei eine definierte zusätzliche Leistungsstufe (A) für den Motor vorgesehen ist, die keinen integralen Bestandteil des Lenkzyklus darstellt und bei der die Drehzahl n des Motors gegenüber der niedrigen Stand-by-Leistungsstufe (B) nochmals signifikant verringert ist oder der Motor gar nicht betrieben wird, **dadurch gekennzeichnet, dass** der Motor permanent an die Pumpe gekoppelt ist und in bestimmten Fahrsituationen, in denen keine hydraulische Lenkunterstützung erforderlich ist und unter bestimmten Voraussetzungen, die eine Beeinträchtigung der Fahrsicherheit ausschließen, in der zusätzlichen Leistungsstufe (A) betrieben wird, und dass aus der zusätzlichen Leistungsstufe (A) in die niedrige Stand-by-Leistungsstufe (B) gewechselt wird.

2. Verfahren nach Anspruch 1, **dadurch gekennzeichnet, daß** die zusätzliche Leistungsstufe (A) im Falle von definierten Lenkbewegungen automatisch verlassen wird.

## Claims

1. A method of controlling a pump drive motor of a hydraulic servo-steering device including a pump, in which the pump drive motor is selectively operated at least in a defined high full load power stage (C), in which the motor is operated at a high speed (n), so that the pump generates a high hydraulic flow, and in a defined low stand-by power stage (B) at a reduced motor speed (n), so that only a small hydraulic flow is maintained, a defined additional power stage (A) for the motor being provided, which does not constitute an integral part of the steering cycle and in which the speed (n) of the motor is significantly reduced again compared with the low stand-by power stage (B) or the motor is not operated at all, **characterized in that** the motor is permanently coupled to the pump, and in certain driving situations in which no hydraulic steering assistance is required and under certain conditions which rule out an impairment to driving safety, the motor is operated in the additional power stage (A), and that a changeover is carried out from the additional power stage (A) to the low stand-by power stage (B).

2. The method according to claim 1, **characterized in that** the additional power stage (A) is left automatically in the case of defined steering movements.

## Revendications

1. Procédé de commande d'un moteur d'entraînement de pompe d'un dispositif de servodirection hydraulique, comportant une pompe dans laquelle le moteur d'entraînement de pompe fonctionne sélectivement au moins dans un étage de puissance à pleine charge (C) élevé défini dans lequel le moteur fonctionne à un régime (n) élevé, de telle sorte que la pompe engendre un flux hydraulique élevé, et fonctionne dans un étage de puissance de veille (B) bas défini avec régime de moteur (n) réduit, de telle sorte qu'il n'est maintenu qu'un écoulement hydraulique faible, un étage de puissance (A) additionnel défini étant prévu pour le moteur, qui ne constitue pas un élément intégral du cycle de direction et dans lequel le régime (n) du moteur est encore réduit de manière significative par rapport à l'étage de puissance de veille (B) bas ou dans lequel le moteur ne fonctionne pas du tout, **caractérisé en ce que** le moteur est accouplé en permanence à la pompe et, dans des situations de conduite déterminées dans lesquelles aucune assistance de direction hydraulique n'est nécessaire, et sous des conditions particulières qui excluent une influence néfaste de la sécurité routière, il fonctionne dans l'étage de puissance additionnel (A), et **en ce qu'**un passage est effectué depuis l'étage de puissance additionnel (A) dans l'étage de puissance de veille (B).

2. Procédé selon la revendication 1, **caractérisé en ce que** l'étage de puissance additionnel (A) est automatiquement quitté dans le cas de mouvements de direction définis.
